# EUROPEAN PATENT APPLICATION

(11) **EP 3 142 319 A1**
(43) Date of publication of application: **15.03.2017**
(21) Application number: 15184749.8
(22) Date of filing: 10.09.2015
(51) Int. Cl.: H04L 29/06, H04L 29/08, H04W 4/26

(54) **PERSONALISED LOGGING OF DATA COMMUNICATION BETWEEN A MOBILE TELECOMMUNICATION NETWORK AND A PACKET DATA NETWORK**

(71) Applicant: DADA Telecom BVBA, 9000 Gent (BE)
(72) Inventor: Ransbottyn, Cain, 2930 Brasschaat (BE)
(74) Representative: Plas, Axel Ivo Michel

(57) **Abstract**

There is disclosed a method for personalised logging of data communication (1, 3) between a mobile telecommunication network (10) of a mobile network operator (12) and a packet data network (20). According to the method there is exchanged data communication (3) of mobile stations (38) of subscribers (34) of a mobile virtual network operator (32) via a proxy server (40). This proxy server (40), by means of a logger module (42), stores, at least partly, the exchanged data communication (3), together with a subscriber identifier (36) of the respective subscriber (34) in a logger database (44).

## Description

### Technical Field

The present invention generally relates to a device and method for logging of data communication. More particularly personalised logging of data communication between mobile stations of subscribers of a mobile telecommunication network of a mobile operator and a packet data network such as for example the internet.

### Background

A system, method and apparatus to monitor mobile internet activity is for example known from EP2418826. EP2418826 discloses a method for personalised logging data communication between a mobile telecommunication network of a mobile network operator and a packet data network such as the internet. EP2418826 discloses that the data communication of mobile stations of subscribers of a mobile network operator of the mobile network operator is exchanged between the mobile telecommunication network and the packet data network via a proxy server. EP2418826 overcomes some problems with known monitoring systems for internet communication of mobile devices that made use of such a proxy server, also known as a HTTP proxy, which required the monitored mobile devices to provide authentication credentials such as a username and password that uniquely identified the mobile device or subscriber involved in the internet communication. Such known monitoring systems allowed monitoring companies to track internet activity of mobile devices and based on the username and password to associate the tracked internet activity with the mobile device or subscriber that originated it. It should be clear that this is what is meant with personalised logging of data communication, namely not only logging the exchanged data communication, but logging it in such a way that the logged data remains correlated to the subscriber that originated it. However such known monitoring systems required the application of the mobile device to be able to support proxy authentication, thereby limiting the monitored internet traffic to that generated by browser applications supporting such proxy authentication. Internet traffic generated by other applications of the mobile device which do not properly respond to requests from the proxy server to provide authentication could not be associated with a particular mobile device or subscriber for enabling personalised logging and increased the risk of such applications failing to function properly. EP2418826 solves this problem requiring the subscriber making use of a mobile device to proceed through a registration process. Upon completion of the registration process the subscriber receives a configuration file on its mobile device. This configuration file is generated during the registration process and assigns a unique port number of the proxy server to the mobile device of a particular subscriber. The mobile device is then configured by means configuration file such that subsequent internet requests originating from this mobile device are addressed to the assigned port number of the proxy server. In this way the requests of a particular mobile device or subscriber can be identified by means of the port number without requiring further authentication of the applications of the mobile device with respect to the proxy server. In this way the proxy server of EP2418826 also enables logging of data communication related to requests for internet content of applications of the mobile device which do not properly respond to authentication requests from a proxy server.

Although EP2418826 increases the number of applications available on the mobile device for which personalised logging of data communication is enabled by dispensing with the need for these applications to be able to handle proxy authentication, it still presents some problems. In order to function properly it requires the mobile device to be correctly configured to make use of the proxy server and more specifically a dedicated port of the proxy server for internet requests. Such configuration of the mobile device for accessing the internet by a user, even when the user is able to perform the configuration by means of a configuration file received on its mobile device is often cumbersome. The received configuration file must match the capabilities of the specific mobile device and of the specific mobile communication network it is connected to. Additionally configuration operations or reconfiguration operations that are performed by the mobile network operator of the subscriber of the mobile device, or when the device is locked or secured to prevent tampering or inadvertent changes to mobile network related settings could interfere with a correct configuration of the mobile device in order to make use of the proxy server. Still further the subscriber of the mobile communication network, before reception of such a configuration file, must first complete a registration process. In this registration process the subscriber must provide registration data through a web interface or by means of another manual data. It is generally known that such a manual registration process in order to obtain data for identifying the subscriber of the mobile device is not user friendly and error prone. It further only provides for a limited level of identity verification and security, unless again additional mechanisms such as passwords or other certification mechanisms are employed which increase complexity and decrease user friendliness. Once the registration data is received a unique port is assigned to registered user and is subsequently used during the data logging operation of the proxy server as an identifier for the registered user. It is clear this limits the potential number of users of mobile devices to be handled by the proxy server to the maximum number of ports that are available for the IP address of the proxy server. Additionally, the use of some of these ports or the continued use of a single port might trigger problems with network security equipment of the mobile network operator. Still further the assignment of a unique port for identifying a particular mobile device of a subscriber is not water tight, as some of the data communication generated by the mobile device might be transmitted to other ports, and/or other devices than the registered mobile device might generate data communication directed to the port assigned to the registered mobile device.

US2011/0202409 describes a method for providing a targeted advertisement to mobile device connected via an access network, such as for example a mobile communication network, to the internet. Data communication of the mobile device is intercepted within the access network by a language insertion engine. This language insertion engine inserts a request source identifier, which comprises for example an identifier for the subscriber of the mobile device of the access network such as MSISDN, IMEI, IMSI, IP address or login credentials. This request source identifier is then used by an analytics server to make available targeted advertising to participating content sources accessed by the mobile device through the access network and the internet. The method of US2011/0202409 requires interception and modification of the data communication of the mobile device within the access network and makes use of request source identifiers that are exclusively available to an operator of the access network. This limits the use of such method to operators of a mobile telecommunication networks and requires such operators to make modifications to the setup of their mobile telecommunication network, which impacts all internet related data communication. Additionally, also the content sources and/or the ad servers must be modified in order to allow for targeted advertising that takes into account the request source identifier. Still further all subscribers of the mobile telecommunication network are subjected to the operation of the language insertion engine operating within the access network. This thus affects the privacy and security of all users of the mobile telecommunication network.

There thus still exists a need for an improved method and system for personalised logging of data communication of subscribers of a mobile telecommunication network of mobile network operator and a packet data network which overcomes the above mentioned problems. It should enable personalised logging of data communication without being limited to specific applications, such as a browser application. Personalised logging should be enabled in a user friendly and simple way both at the side of the subscriber as at the side of the mobile network operator, with a minimal impact on the configuration and setup of both the mobile device and the mobile telecommunication network of the network operator, while still allowing for secure and reliable verification of the subscriber identity for allowing a personalised logging.

Finally, it is acknowledged, that there is known the use of a server of a mobile virtual network operator in order to monitor usage for billing purposes. Such a system is for example known from US2009/0181641 which provides for a server operated by a mobile virtual network operator to track and enforce usage limits such as for example a maximum number of data bits transferred per billing period, maximum number of images transferred per billing period, etc. Additional functionality provided by this server includes for example reformatting digital content in order to adapt it to the available network bandwidth, screen size of the mobile device etc. US2009/0181641 however does not disclose use of such a server operated by a mobile virtual network operator for personalised logging of data communication of a subscriber of a mobile virtual network operator for further analysis. When confronted with the abovementioned problem, prior to the teaching of this application, a skilled person would thus not consider systems such as that known from US2009/0181641 to provide a basis for an improved method and system for personalised logging of data communication of subscribers of a mobile telecommunication network.

### Summary

According to a first aspect of the invention, there is provided a method for personalised logging of data communication between a mobile telecommunication network of a mobile network operator and a packet data network, the method comprising the steps of:
- establishing a mobile virtual network operated by a mobile virtual network operator, the mobile virtual network making use of the mobile telecommunication network of the mobile network operator, the mobile virtual network comprising a proxy server outside the mobile telecommunication network;
- exchanging said data communication of mobile stations of subscribers of the mobile virtual network operator between the mobile telecommunication network and the packet data network via said proxy server, said proxy server, by means of a logger module, storing, at least partly, the exchanged data communication, together with a subscriber identifier of the respective subscriber in a logger database; and
- exchanging said data communication of mobile stations of subscribers of the mobile network operator, which are not subscribers of the mobile virtual network operator, not via said proxy server.

In this way the method allows personalised logging of data communication between a mobile telecommunication network of a mobile network operator and a packet data network without being limited to specific applications, as all data communication of the subscribers of the mobile virtual telecommunication network are exchanged via the proxy server. This method minimizes the need for modifications to the telecommunication network of the mobile network operator as the proxy server of the mobile virtual telecommunication network is located outside the mobile telecommunication network. Further it increases user friendliness at the side of the subscriber as no additional or specific configuration of the mobile station of the subscribers of the mobile virtual network operator is required. As a mobile virtual network operator makes use of the authentication and security functionality of the mobile network operator, this allows for a more secure and reliable verification of the subscriber identity. Still further, as the data communication of subscribers of the mobile network operator that are not subscribers of the mobile virtual network operator is not exchanged via the proxy server of the mobile virtual network operator, there is no risk that privacy and security of all subscribers of the mobile network are affected by providing the personalised logging functionality.

According to an embodiment there is provided a method, wherein the method comprises the further steps of, when exchanging said data communication of subscribers of the mobile virtual network operator:
- said proxy server exchanging with the mobile telecommunication network the subscriber identifier of the subscriber;
- said proxy server not exchanging the subscriber identifier of the subscribers with the packet data network.

In this way the logging functionality can be provided without affecting privacy of the MVNO subscribers with respect to the packet data network, such as for example the internet.

According to a further embodiment there is provided a method, wherein the mobile telecommunication network comprises a packet data network gateway, the method comprising the further step of the packet data network gateway selectively routing:
- said data communication of subscribers of the mobile virtual network operator to the proxy server; and
- said data communication of subscribers of the mobile network operator, which are not subscribers of the mobile virtual network operator, not via said proxy server, to the packet data network.

This allows for a particular simple and efficient implementation which requires no extensive modifications to the mobile telecommunication network of the mobile network operator.

According to a further embodiment there is provided a method, wherein the method comprises the further step of the packet data network gateway selectively providing:
- a first access point name for establishing said data communication of subscribers of the mobile network operator, which are not subscribers of the mobile virtual network operator, to the packet data network;
- a further access point name, different from said first access point name, for establishing said data communication of subscribers of the mobile virtual network operator to the proxy server.

This allows for a simple implementation which also does not require any configuration work to the mobile stations of the MVNO subscribers further than typical configuration operations performed during a subscription process, such as for example setting a correct access point name related to the MVNO subscription.

According to a further embodiment there is provided a method, wherein the method comprises the further steps of:
- providing the mobile stations of the subscribers of the mobile virtual network operator with a root certificate for allowing secured exchange of data communication to the proxy server;
- the proxy server establishing a secured exchange of said data communication of mobile stations of subscribers of the mobile virtual network operator between the mobile telecommunication network and the packet data network via said proxy server, by:
   - providing a secured exchange of said data communication through said mobile telecommunication network authenticated by means of said root certificate;
   - said logger module of the proxy server accessing said secured data communication exchanged through said mobile telecommunication network by means of said root certificate;
   - providing a secured exchange of said data communication through said packet data network authenticated by means of a valid certificate of a trusted certificate authority.

In this way a simple and effective embodiment is provided which allows for logging of secured data communication which does not compromise security both with respect to the packet data network as well as the mobile telecommunication network of the mobile network operator.

According to a further embodiment there is provided a method, wherein the secured exchange of said data communication with the proxy server makes use of at least one of the following protocols for secured communication over a packet data network:
- Hypertext Transfer Protocol with a connection encrypted by Transport Layer Security;
- Hypertext Transfer Protocol with a connection encrypted by Secure Sockets Layer.

According to a further embodiment there is provided a method, wherein the proxy server further comprises a configuration module connected to the logger module, and the method comprises the further step of the configuration module configuring the logger module to selectively log said data communication exchanged through said proxy server in function of configuration parameters corresponding to one or more of the following:
- a client application of the mobile station involved in the exchanged data communication;
- a targeted server coupled to the packet data network involved in the exchanged data communication.

In this way a selective logging functionality is provided for.

According to a further embodiment there is provided a method, wherein the configuration module comprises respective configuration parameters for each of the subscribers of the mobile virtual network operator.

In this way a selective, personalised logging functionality is provided for.

According to a further embodiment there is provided a method, wherein the mobile station of the subscriber of the mobile virtual network operator comprises a configuration client application, and the method comprises the further step of the subscriber adapting its respective configuration parameters of the configuration module by means of the configuration client application.

In this way a flexible, selective, personalised logging functionality is provided for.

According to a further embodiment there is provided a method, wherein the configuration module comprises for each of the subscribers a first setting of the configuration parameters for the configuration module and at least one further setting of the configuration parameters different from said first setting of the configuration parameters, the method comprising the further step of the configuration module configuring the logger module by means of the first setting of the configuration parameters during a first time period and by means of the at least one further setting of the configuration parameters during at least one respective further time period.

In this way a user friendly flexible, selective, personalized logging functionality is provided for, which is able to take into account different logging requirements during different time periods.

According to a further embodiment there is provided a method, wherein the method comprises the further step of the logger module further storing in the logger database:
- a time stamp related to the stored exchanged data communication;
- a client application of the mobile station involved in the stored exchanged data communication;
- a targeted server coupled to the packet data network involved in the stored exchanged data communication.

According to a further embodiment there is provided a method, wherein the proxy server comprises an analysis module coupled to the logger database, the method comprising the further step of calculating the time spent on content provided by a targeted server to a client application in function of a time period starting with the time stamp of the request from this client application for this content from the targeted server and ending with the time stamp of the soonest of one the following events subsequent to the start of the time period:
- a request by this client application for other content of the targeted server;
- a request by this client application for content of another targeted server;
- an exchanged data communication generated by another client application.

In this way the time spent on content can be calculated in a more reliable and efficient way without requiring modifications to the client application, nor the targeted server, nor the exchanged content.

According to a further embodiment there is provided a method, wherein the proxy server comprises an analysis module coupled to the logger database, the method comprising the further step of calculating a usage time of a client application in function of a time period starting with the time stamp of exchanged data communication by this client application and ending with the time stamp of a soonest subsequent exchanged data communication generated by another client application.

In this way the usage time of a client application can be calculated in a more reliable and efficient way without requiring modifications to the client application, nor the targeted server, nor the exchanged content.

According to a further embodiment there is provided a method, wherein the subscriber identifier comprises one or more of the following:
- an international mobile subscriber identity;
- a Mobile Station International Subscriber Directory Number;
- an International Mobile Station Equipment Identity,
   and/or wherein the method comprises the further step of supplementing the logger module further storing in the logger database together with the subscriber identifier one or more of the following respective data received:
- from the mobile network operator:
   - billing data;
   - call data records;
- from the respective mobile station:
   - cell id;
- Global Positioning System coordinates.

In this way the logged exchanged data communication can be enriched by additional data available to the mobile virtual network operator in a simple and efficient way.

According to a second aspect of the invention there is provided a system configured to perform the method for personalised logging of data communication between a mobile telecommunication network of a mobile network operator and a packet data network according to the first aspect of the invention, the system comprising:
- a mobile virtual network operated by a mobile virtual network operator, the mobile virtual network configured to make use of the mobile telecommunication network of the mobile network operator, the mobile virtual network comprising a proxy server outside the mobile telecommunication network;
- the system being configured to exchange said data communication of mobile stations of subscribers of the mobile virtual network operator between the mobile telecommunication network and the packet data network via said proxy server, said proxy server comprising a logger module configured to store, at least partly, the exchanged data communication, together with a subscriber identifier of the respective subscriber in a logger database; and
- the system being configured to exchange said data communication of mobile stations of subscribers of the mobile network operator, which are not subscribers of the mobile virtual network operator, not via said proxy server.

### Brief Description of the Drawings

Embodiments of the invention will now be described with reference to the drawings. It is however clear that still further embodiments, variations and combinations are possible within the scope of the invention as defined by the claims.
Figure 1 illustrates an embodiment of a system for personalised logging of data communication between a mobile telecommunication network of a mobile network operator and a packet data network;
Figure 2 illustrates an embodiment of a method of operating the embodiment of the system of Figure 1 when the exchanged data communication between the client application of the mobile station and the server is secured;
Figure 3 schematically illustrates an embodiment of a method that allows for the configuration module to be provided with different settings of configuration parameters during different time periods;
Figure 4 schematically illustrates an advantageous embodiment of a method for calculating time spent on content provided by a targeted server connected to the packet data network;
Figure 5 schematically illustrates an embodiment of a method for calculating a usage time of a client application of the mobile station of a subscriber of the mobile virtual network operator
Figure 6 shows a suitable computing system for hosting the proxy server of the system of Figure 1.

### Detailed Description of Embodiment(s)

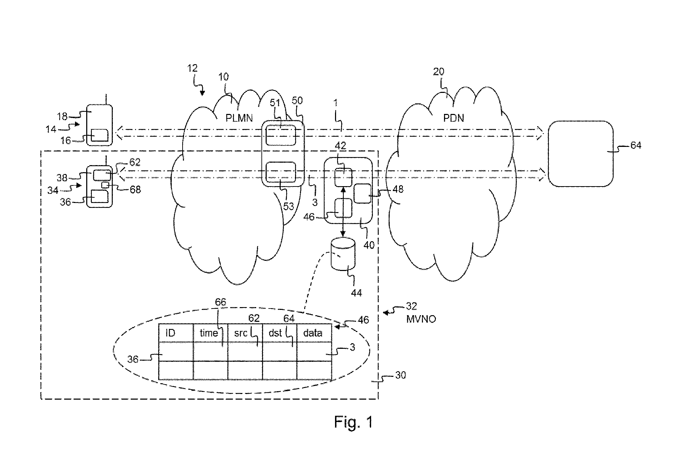

Figure 1 schematically shows an embodiment of a system which is operated according to the method for personalised logging of data communication as will be described in further detail below. As shown there is provided a mobile telecommunication network 10 of a mobile network operator 12 or MNO 12. Such a mobile telecommunication network is often referred to as a Public Land Mobile Network 10 or PLMN 10. Such a PLMN 10 provides communication services by means of an air interface involving radio communications between mobile stations 18 of subscribers 14 of the MNO 12 and land-based radio base stations and further mobile telecommunication network equipment of the PLMN 10 of the MNO 12. Known examples of such a PLMN are for example: a GSM or Global System for Mobile Communications mobile telecommunication network according to the standard developed by the European Telecommunications Standards Institute or ETSI and/or further or alternative second-generation or 2G digital cellular mobile telecommunication network standards used by mobile phones such as for example General Packet Radio Service or GPRS; Enhanced Data rates for GSM Evolution EDGE, Interim Standard 95 or IS-95 or CDMA-based second generation cellular telecommunication networks. Further examples of known PLMNs 10 comprise for example mobile telecommunication networks as defined in the standards of the 3rd Generation Partnership Project or 3GPP such as for example Universal Mobile Telecommunications System or UMTS or other or related third-generation or 3G standards such as for example High Speed Packet Access or HSPA, CDMA2000, etc. Still further examples of PLMNs 10 comprise Long Term Evolution or LTE or other or related fourth-generation or 4G standards such as for example Mobile WiMAX; fifth-generation or 5G mobile telecommunication networks as defined by the Next Generation Mobile Networks Alliance defines the following requirements for 5G; etc.

In order for a subscriber 14 to access the PLMN 10 of the MNO 12 it is required that the mobile station 18 of the subscriber 14 provides for the required identification by means of a subscriber identifier 16. Such a subscriber identifier 16 could for example be provided on a Universal Integrated Circuit Card or UICC, which is the smart card used in mobile terminals 18 of for example GSM, UMTS, LTE, etc. mobile telecommunication networks. This UICC is of the also referred to as a SIM card and comprises at least one unique parameter that can be used as a subscriber identifier 16. When a subscriber 14 subscribes to the services of the MNO 12, the MNO 12 will provide the subscriber with a SIM card comprising such a subscriber identifier 16 and will subsequently make use of this subscriber identifier 16 for authentication and billing purposes. The subscriber identifier 16 is preferably an international mobile subscriber identity or IMSI which uniquely identifies the subscriber 14. However it is clear that alternative or combinations with other parameters are possible such as for example a Mobile Station International Subscriber Directory Number or MSISDN which is used to identify a mobile phone number internationally, an International Mobile Station Equipment Identity or IMEI which uniquely identifies the mobile station 18 of the subscriber 14, etc.

There is further shown a packet data network 20 or public data network 20 or PDN 20. The PDN 20 could for example be a wide area network such as the internet, or a Local Area Network such as for example a company or university network, etc. In general a known PDN 20 such as for example the internet provides packet switched access to an extensive range of information resources and services provided by interconnected content or application servers 64. These servers 64 are for example web servers, email servers, etc. which provide for an exchange of data communication 1 with general applications of the World Wide Web or WWW such as inter-linked hypertext documents, electronic mail, etc. This data communication 1 with the server 64 could for example be exchanged with a suitable client application such as a browser or email client provided on the mobile station 18 of the subscriber 14 of the MNO. Alternatively such servers 64 could for example also provide for a dedicated exchange of data communication 1 with a dedicated client application on the mobile station 18 of the subscriber, often also referred to as a mobile apps. Such dedicated client applications could for example allow dedicated access to maps for navigational services, dedicated access to video-sharing or video-streaming services, dedicated access to online social networking services, etc.

As further shown in Figure 1, the PLMN 10 comprises a suitable gateway 50 which connects the PLMN 10 with the PDN 20 for exchanging data communication 1. Such a gateway 50 could for example be a a PGW or PDN Gateway which provides for data communication 1 between the mobile stations 18 of subscribers of an MNO 12 of a PLMN 10 operated according to the LTE standard and an external packet data network such as for example the internet. It is clear that other types of suitable gateways 50 for corresponding types of mobile telecommunication networks 10 are possible, such as for example a Gateway GPRS Support Node or GGSN of a GPRS PLMN, etc. As shown a client application of the mobile station 18, such as a mobile phone 18 of the subscriber 14 of the MNO 12, can exchange data communication (1) with a server 64, such as for example a web server, via the PLMN 10, through the gateway 50 of the PLMN 10, and subsequently through the PDN 20. As further shown the gateway 50 of the PLMN 10 is preferably identified by means of an Access Point Name 51. It is known to the skilled person that mobile stations 18 of subscribers 14 of a MNO 12 of a PLMN, as part of the subscription process are provided with a subscriber identifier 16 and correspondingly also with configuration information comprising an APN 51 which is the name of the gateway 50 between for example a GPRS, 3G, 4G, etc. type of PLMN 10 and a PDN such as for example the internet. When establishing data communication 1 this APN 51 provided by the mobile station 18 to the PLMN 10 then identifies the PDN 20 with which the mobile station 18 wishes to exchange the data communication 1.

As further shown in Figure 1 the system further also comprises a mobile virtual network 30 operated by a mobile virtual network operator 32. As generally known, such a mobile virtual network operator 32 provides mobile telecommunication services to the mobile stations 38 of its subscribers 34 without owning the wireless network infrastructure as previously described with reference to the PLMN 10 of the MNO 12. Instead, as shown, it makes use of the mobile telecommunication network 10 of the mobile network operator 12. The MVNO 32 enters into a business agreement with the MNO 12 to obtain access to the PLMN 10 network services at wholesale rates. The MNO 12 for example provides a dedicated set of SIM cards which correspond to a dedicated set of subscriber identifiers 36 to the MVNO 32 for use by the mobile stations 38 of subscribers 34 of the MVNO 32. In this way, as generally known to a person skilled in the art, similar as described above with reference to the mobile station 18 of a subscriber of the MNO 12, this subscriber identifier 36, such as for example an IMSI and/or related identifiers, will allow for access and authentication to the mobile virtual network 30 which makes use of the PLMN 10 of the MNO 12.

However, as shown in Figure 1, the mobile station 38 of the subscriber 34 of the MVNO 32 is configured to make use of a further access point name or APN 53, different from said first access point name 51 of the mobile station 18 of the subscriber 14 of the MNO 12 which is not a subscriber of the MVNO 32. As shown in Figure 1, according to this embodiment the packet data network gateway 50 thus selectively provides a first access point name 51 for establishing data communication 1 of subscribers 14 of the mobile network operator 12, which are not subscribers 34 of the mobile virtual network operator 32, to the packet data network 20. Additionally the gateway 50 selectively provides also a further access point name 53, different from the first access point name 51, for establishing data communication 3 of subscribers 34 of the mobile virtual network operator 32. As further shown the data communication 3 exchanged for example between a client application on the mobile station 38 of the subscriber 34 of the MVNO 32 and for example a web server 64 connected to the PDN 20 is routed by the selective gateway 50 to a proxy server 40 of the mobile virtual network 30 of the MVNO 32. As shown the proxy server 40 is coupled to the selective gateway 50 of the PLMN 10 at one side and to the PDN 20 at the other side. The proxy server 40 generally functions as an intercepting proxy or inline proxy which intercepts all data communication 3 exchanged between the mobile station 38 of subscribers 34 of the MVNO and the PDN 20. Preferably the proxy server 40 intercepts all data communication 3 between the PLMN 10 and the PDN 20 of these MVNO subscribers 34. This thus means intercepting incoming and outgoing data communication 3 between for example a client application of the mobile station 38 of an MVNO subscriber 34 and a web server 64 or a dedicated application server 64 connected to the PDN 20.

As shown in Figure 1, it is thus clear that the selective gateway 50 of the PLMN 10, by means of the different APNs 51 and 53 provides selective routing of data communication of only the MVNO subscribers to the proxy server 40. It is clear that alternative embodiments of such a gateway 50 are possible, as long as in general the mobile telecommunication network 10 comprises such a selective packet data network gateway 50. Such a selective packet data network gateway 50 selectively routes the data communication 3 of subscribers 34 of the mobile virtual network operator 32 to the proxy server 40. Additionally such a selective packet data network gateway 50 selectively routes the data communication 1 of subscribers 14 of the mobile network operator 12, which are not subscribers 34 of the mobile virtual network operator 32, not via said proxy server 40, to the packet data network 20.

As further shown in Figure 1, the proxy server 40 comprises a logger module 42. This logger module is coupled to a logger database 44. In this way the logger module 42 is configured to store the exchanged data communication 3, together with a subscriber identifier 36 of the respective subscriber 34 in the logger database 44. This is possible as the proxy server 40 is part of the mobile virtual network 30 of the MVNO 32. During the exchange of data communication 3 of subscribers 34 of the mobile virtual network operator 32 the proxy server 40 exchanges with the PLMN 10 the subscriber identifier 36 of the MVNO subscriber 34. The exchange of this subscriber identifier 36 could for example occur during an authentication operation of the mobile station 38 of an MVNO subscriber 34 or during the setup of a connection or session of the mobile station 38 by means of the APN 53 of the selective gateway 50 as explained above. Although according to some embodiments the exchanged data communication 3 could be stored entirely, it is clear that according to alternative embodiments the exchanged data communication 3 could be stored only partly in the logger database 44 by means of the logger module 42. Preferably the proxy server 40 does not exchange the subscriber identifier 36 of the MVNO subscribers 34 with the packet data network 20. In this way privacy and security of the MVNO subscribers 34 with respect to a public PDN 20 such as the internet remains guaranteed.

It should thus be clear that in this way personalised logging of the exchanged data communication 3 between the PLMN 10 and the PDN is provided for as the logger module 42 enables correlation of the logged data communication with the subscriber identifier 36 of the MVNO subscriber 34 of the mobile station 38 involved in the exchanged data communication. Additionally the personalised logging is made available in a selective and flexible way as the subscribers 14 of the MNO 12 which are not subscribers of the MVNO 32 are not affected by the logger module 42 of the proxy server 40. Still further the logger module 42 allows for logging of all data communication 3 exchanged, irrespective of the protocol used by the client application of the mobile station 38 and/or the server 64 connected to the PDN 20, and irrespective whether it concerns incoming or outgoing data communication 3. This is accomplished without requiring modifications to the client applications on the mobile station 34 of the MVNO subscriber or the server 64 connected to the PDN. It also minimizes impact on the configuration of the PLMN 10 as it for example only requires a dedicated APN 53 for the MVNO subscribers 34. The configuration of the dedicated APN 53 at the mobile station 38 of the MVNO subscribers 34 is a configuration operation that is performed during completion of the subscription process of the MVNO 32, in which for example a SIM card comprising and/or supplemented with corresponding configuration information needs to be installed in the mobile station 38 of the MVNO subscriber 34.

The mobile station 38, such as a mobile phone, typically comprises a plurality of trusted root certificates at the level of the operating system or at the level of client applications such as for example a browser client application. Such root certificates are for example used to verify identities during a secured exchange of data communication. Known protocols for secured communication over a packet data network such as the internet which rely upon such root certificates are for example a Hypertext Transfer Protocol with a connection encrypted by Transport Layer Security or HTTP over TLS, or a Hypertext Transfer Protocol with a connection encrypted by Secure Sockets Layer or HTTP over SSL, often also referred to as HTTPS. In order for a server 64, such as for example a web server connected to the PDN 20 to accept HTTPS connections, the server 64 must comprise a valid certificate of a trusted certificate authority. Such a trusted certificate authority in this way validates that the holder of the valid certificate is the operator of the server 64 that presents this valid certificate. In this way it is prevented that the data communication 3 exchanged with a client application of the mobile station 38 is intercepted by another malicious server pretending to be server 64 as the trusted authority would not provide such a valid certificate to an operator of such a malicious server.

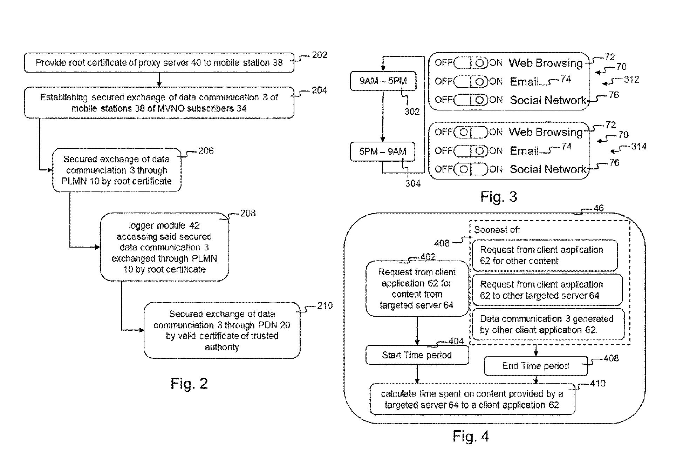

Figure 2 shows a method of operating the embodiment of the system of Figure 1 in order to allow logger module of the proxy server 40 to perform its personalised logging function even when the exchanged data communication between the client application 62 of the mobile station 38 and the server 64 is secured as described above. As shown in step 202 the mobile stations 38 of the MVNO subscribers 34 are provided with a root certificate. This root certificate could for example be provided to the mobile station 38 as part of the subscription process to the MVNO. As already explained above, during the subscription process the MVNO subscriber 34 is provided with for example a SIM card with corresponding subscriber identifiers 36 and configuration settings of the APN 53. Additionally during this subscription process also this root certificate could be added to the mobile station of the MVNO subscriber. A typical operating system of such mobile stations, such as for Android, IOS, etc. provide configuration functionality in order to add such an additional root certificate. It should be clear that this root certificate provided to the client is also available on the proxy server 40 in such a way that it allows for a secured exchange of data communication 3. This means that the proxy server 40 is able to make use of this root certificate or suitable certificates derived from this root certificate in order to provide for a secured exchange of data communication with the mobile stations 38 of the MVNO subscribers 34.

As further shown in Figure 2, after step 202, which normally needs to be performed only once, for example during the subscription process of the MVNO subscriber 34, the mobile stations 38 of MVNO subscribers 34 will be able to set up a secured exchange of data communication 3 without the need for any special configuration of any of the client applications making use of such a secured exchange of data communication 3. When such a secured exchange of data communication 3 is required, as shown in Figure 2 at step 204, the proxy server 40, will ensure, as will be explained with reference to steps 206, 208 and 210, that this secured exchange of data communication 3 of mobile stations 38 of MVNO subscribers 34 can be established, without requiring any dedicated operations both at the side of these mobile stations 38, nor at the side of the server 46 connected to the PDN. This thus means that the proxy server 40 enables that such a secured exchange of data communication 3, between the PLMN 10 and the PDN 20 via this proxy server 40, is established in a simple and effective way, without compromising the required level of security. This means that both with respect to the PLMN 10, as well as with respect to the PDN 20 the same level of security is achieved as would be available in such a secured exchange of data communication without involvement of the proxy server 40.

In order to achieve this, as shown in Figure 2, at step 206, there is provided a secured exchange of data communication 3 through the PLMN 10 which is authenticated by means of the root certificate. This root certificate of the proxy server 40 will also allow at subsequent step 208 to access the secured data communication. Because of the part of the secured exchange of data communication 3 through the PLMN 10 between the proxy server 40 and the mobile station 38 is secured by means of the root certificate, the logger module 42 of the proxy server 40 will be able to access this part of the secured data communication 3 in order to store it in the logger databse 44 along with the subscriber identifier 36 of the MVNO subscriber generating it. Subsequently, as shown in step 210 of Figure 2, the proxy server 40 also enables a secured exchange of the data communication 3 between the proxy server 40 and the server 46 through the PDN 10. This is accomplished by the proxy server 40 establishing a secured exchange of the data communication 3 by means of a valid certificate of a trusted certificate authority which authenticates the server 46 connected to the PDN 20 with which the data communication 3 is exchanged. It is thus clear that in this way the secured exchange of data communication 3 is ensured at the side of the PLMN 10 by means of the root certificate and at the side of the PDN 20 by means of a valid certificate of a trusted certificate authority. The root certificate of the proxy server 40 both enables it to perform its logger function by means of the logger module 42 and in order to access the data communication 3 exchanged such that it can be transparently forwarded along a secured communication channel by means of the root certificate through the PLMN 10 and along a secured communication channel by means of the valid certificate of a trusted certificate authority through the PDN 20.

As further shown in the embodiment of Figure 1, the proxy server 40 further comprises a configuration module 48. This configuration module 48 is coupled to the logger module 42. The configuration module 48 allows adapting the configuration of the logger module 42. In this way the configuration module 48 allows configuration of a selectively logging of the data communication 3 exchanged through said proxy server 40 in function of configuration parameters 70. Figure 3 shows a schematic representation of such configuration parameters 70. As shown, these configuration parameters 70 provide for the configuration of the logger module 42 to selectively store exchanged data communication 3 in the logger database 44. The embodiment of Figure 3 shows a plurality of configuration parameters 72, 74, 76, which allow the configuration of selectively logging exchanged data communication 3 related to the categories "Web browsing", "Email" and "Social Network". The settings of these configuration parameters 70 thus allow to selectively enable or disable the logger module 42 from storing exchanged data communication 3 related to such a category. As shown in the top set of configuration parameters 70 of Figure 3, the setting 312 of the configuration parameters 70 configures the configuration module 48 to store all data communication exchanged, related to all three categories 72, 74, 76 in the logger database 44. The setting 314 of the lower set of configuration parameters 70 shown in Figure 3, alternatively configures the configuration module 48 to store data communication 3 exchanged with respect to the category "email" 74, while selectively disabling storage of exchanged data communication 3 with respect to both other categories "Web Browsing" 72 and "Social network" 74.

The embodiment of the method shown in Figure 3 allows for the configuration module to be provided with different settings of configuration parameters 70 during different time periods. According to the embodiment shown, during a first time period 302, for example a time period corresponding to office hours which corresponds to a time period from 9AM to 5PM, the first setting 312 of the configuration parameters 70 is used to configure the configuration module 48. As mentioned above during this first time period 302, for example during working hours, the configuration module configures the logger module 42 to store all data communication exchanged of all three categories 72, 74, 76 in the logger database 44. During the second time period, for example a time period from 5PM to 9AM, the second setting 314 of the configuration parameters 70 is used to configure the configuration module 48 to selectively store data communication 3 only with respect to the category "email" 74. In this way the settings of the configuration parameters 70 could be configured to for example automatically match the desired logger module 42 configuration during different time periods of a day, for example to take into account different desired settings during working hours and outside working hours. It is clear that according to alternative embodiments any desired number of time periods could be defined with a corresponding setting of the configuration parameters 70. It is further clear that these time periods should not be a particular share of a 24 hour period, but could be any particular repetitive or non-repetitive selection of one or more particular time periods, such as for example particular time periods during the work week, particular time periods during which a marketing survey is to be performed, particular time periods during which a commercial or television show is being broadcasted, etc. It is clear that still further alternative embodiments are possible, as long as in general the configuration module 48 configures the logger module 42 by means of a first setting 312 of the configuration parameters 70 during a first time period 302 and by means of the at least one further setting 314 of the configuration parameters 70 during at least one respective further time period 304.

According to a preferred embodiment the configuration module 48 comprises respective configuration parameters for each of the subscribers 34 of the mobile virtual network operator 32. In this way the configuration parameters can be tailored on an individual subscriber basis. This could for example be implemented, as shown in the embodiment of Figure 1, by means of a configuration client application 68. Such a configuration client application 68 could for example be a suitable application or App installed on the mobile station 38 of the subscriber 34 of the mobile virtual network operator 32. This configuration client application 68 could then provide for a suitable user interface which allow the subscriber to input suitable settings for the configuration parameters 70. According to an embodiment of the configuration client application 68, there could be displayed a set of configuration parameters 70 with corresponding selectors for selectively enabling or disabling the logger module 42 to log particular categories of exchanged data into the logger database 44. This allows the MVNO subscriber 34 to selectively determine with a high level of flexibility the specific data for which a personalised logging by means of the logger module 42 in the logger database 44 is to be enabled or disabled. The inputted settings for the configuration parameters 70 by means of the configuration client application 68 of the mobile station 38 of the MVNO subscriber 34 can then be exchanged with the configuration module 48 of the proxy server 40. According to an exemplary embodiment, this could for example be accomplished by exchanging the settings for the configuration parameters 70 via the PLMN 10 between the configuration client application 68 and the configuration module 48 in a similar way as explained for an exchange of data communication 3 above. In this way the proxy server 40 will receive the personalised configuration parameters 70 for each respective MVNO subscriber 34 along with the corresponding subscriber identifier 36. It is clear that these personalised configuration parameters 70 will then enable the configuration module 48 to configure the logger module 42 to perform the selective logging operation in a personalised way in function of the respective configuration parameters of each of the respective MVNO subscribers. It is clear that such a configuration client application 68 thus allows the MVNO subscribers to flexibly set and adapt the respective configuration parameters of the configuration module 48. However it is clear that according to alternative embodiments some or all of the configuration parameters could be set by another entity than the MVNO subscriber itself. Such an embodiment is for example particularly useful in order to provide for parental control, enforcement of company policies, enforcement of security or auditing functionality, etc. In such a context some or all of the configuration parameters for a particular MVNO subscriber could be set by for example a parent, a company IT administrator, the MVNO, etc. in function of the required level of selective personalised logging by the logger module 42 that must be ensured. As explained above, this could for example also be automatically adapted in a personalised way, this means that for example a parent can determine, dependent on each child's age which type of data exchange 3 should be logged, a company IT administrator can set the types of data exchange 3 that should be logged in function of the role or function the particular MVNO subscriber 34 has in the company, an MVNO can set the types of exchanged data 3 to be logged in function of the type of subscription of the specific MVNO subscriber 34. It is clear that even in embodiments in which there is made use of such administrative settings of the personalised configuration parameters, set by a user different from the MVNO subscriber, preferably, for example by means of the configuration client application 68 the specific setting of these configuration parameters is still available to the MVNO subscriber in a transparent way. This could for example be realized by showing these administrative configuration parameters as read only settings in the user interface of the configuration client application 68. These read only settings show to the MVNO subscriber 34 what the current setting is for the respective configuration parameter, without enabling the MVNO subscriber 34 to modify these read only settings. It is clear that according to still further embodiments the configuration client application 68 could provide for any suitable combination of such read only configuration parameters as well as further configuration parameters of which the MVNO subscriber 34 is allowed to change the setting for use by the configuration module 48. According to still further embodiments, any or all of the settings of the configuration parameters could be configured by the configuration client application 68 and/or a suitable configuration application for use by an administrative user to be automatically set or modified in function of a corresponding time period, similar as explained above with reference to Figure 3. Although it is preferred to make available individual respective configuration parameters 70 on the level of each corresponding individual MVNO subscriber 34, as described above, it is clear that according to alternative embodiments such configuration parameters 70 could be determined for a predetermined subset of such MVNO subscribers 34, for example based on the function of an MVNO subscriber in an organisation in a company policy enforcement context, or whether the MVNO subscriber is marked as a child or adult in a parental control context, etc.

As explained above with reference to Figure 3, the configuration module 48 configuring the logger module 42 to selectively log said data communication 3 exchanged through said proxy server 40 in function of configuration parameters 70. According to the embodiment shown in Figure 3 these configuration parameters 70 in this way for example allow selective enabling or disabling of logging of data communication exchanged related to a plurality of categories such as "Web browsing", "Email", "Social Network", etc. The particular category of the exchanged data communication 3 could be determined by the proxy server 40 by for example a determination of which client application 62 of the mobile station 38 of the MVNO subscriber 34 is involved in the exchanged data communication 3. If for example it is detected that the type of data communication 3 exchanged is for example related to requests of a browser client application, or the protocol used in the exchanged data communication relates to data communication 3 exchanged with an email client application, or if an identifier of a specific client application related to tracking of health parameters is detected in the exchanged data communication, etc. , this allows the logger module 42 of the proxy server 40 to associate the exchanged data communication 3 to the respective configuration parameters 70 of the configuration module 48 and apply the respective selective logging of the related data communication 3 in function of the settings of these configuration parameters 70. Alternatively the type of data communication 3 which correlates to a particular configuration parameter 70 could also be determined in function of a particular targeted server 64 coupled to the packet data network 20 involved in the exchanged data communication 3. If for example a data communication 3 is exchanged by one or more client applications 62, such as for example a browser application or a dedicated social network client application of the mobile station 38 of an MVNO subscriber 34, via the proxy server 40 with a targeted server 64, then irrespective of the client application involved, the data communication 3 could be exchanged with a targeted server 64 of which the domain name for example comprises "facebook.com" or another suitable identifier for identification of a particular targeted server 64 of a social network provider. This would then allow the logger module 42 of the proxy server 40 to associate such data communication 3 to for example the respective configuration parameter 76 of the category "Social Network". In this way the logger module 42 can then apply the respective selective logging of the related data communication 3 in function of the settings of these configuration parameters 70 of the configuration module 48. It is clear that the still further embodiments to those described above are possible, in which for example any combination of the corresponding client application 62 of the mobile station 38 and/or the targeted server 64 coupled to the packet data network 20 involved in the exchanged data communication 3 via the proxy server 40, is correlated to one or more respective configuration parameters 70 which configure the configuration module 48 to configure the selective logging of the logging of the logger module 42.

As further shown in Figure 1, according to this embodiment the logger module 42 further stores in the logger database 44, in addition to the exchanged data communication 3 and the corresponding subscriber identifier 36 of the MVNO subscriber 34, a time stamp 66 related to the stored exchanged data communication 3. This could for example be a suitable date and time database field comprising suitable data for allowing to determine at what point in time the data communication 3 was exchanged and logged. As further shown, there is also stored an identifier of a client application 62 of the mobile station 38 involved in the stored exchanged data communication 3 and an identifier of a targeted server 64 coupled to the packet data network 20 involved in the stored exchanged data communication 3. An identifier for the client application 62 could for example be present in the exchanged data communication or the type, particular protocol, content, etc. of the exchanged data communication 3 could for example comprise or match a signature corresponding to a particular client application 62 of the mobile station 38 of the MVNO subscriber 34. It should be clear that this for example allows, in addition to logging of data communication 3 of general client applications such as browser applications, email applications, etc., to also achieve personalised logging of the data communication 3 exchanged with dedicated client applications 62, such as for example a dedicated client application 62 distributed by an operator of a social network service, etc. The logger database 44 could for example store as an identifier suitable for identification of the client application 62 a unique name corresponding to this client application 62, such as for example the "package name" or "application id" of a client application 62 on a mobile station 38 making use of the ANDROID operating system, the " App-id" of a client application 62 on a mobile station 38 making use of the IOS operating system or any other suitable unique name or identifier allowing the identification of the client application 62 involved in the exchange of the logged data communication 3 in the logger database 44. The identifier of the targeted server 64 coupled to the packet data network 20 involved in the stored exchanged data communication 3 could for example be a suitable identifier such as the IP address, the domain name, or any other suitable name or identifier that allow to uniquely identify the targeted server 64.

As further shown in Figure 1, according to this embodiment the proxy server 40 also comprises an analysis module 46. As shown, the analysis module 46 is coupled to the logger database 44. As will be explained with reference to the embodiment of Figure 4, this analysis module 46 enables to calculate the time spent on content provided by a targeted server 64 to a client application 62 in a more reliable way then possible with prior art solutions which were often limited to a particular client application such as a browser application or a particular targeted server 64 providing the content and are unable to provide for a reliable indication of the time spent on content, especially in the context of mobile stations 18, such as mobile phones, etc. that also make use of dedicated client applications for accessing particular targeted servers 64. As shown, at step 402, the analysis module 46 makes use of the associated time stamp of a request from the client application 62 for this content from the targeted server 64 as present in the logged data provided by the logger module 42 of the proxy server 40 to the logger database 44. At step 404 this time stamp is used as the start of a time period. Subsequently, at step 406, the time stamp 66 of the soonest of one the following events subsequent to the start of the time period:
- a request by this client application 62 for other content of the targeted server 64;
- a request by this client application 62 for content of another targeted server 64;
- an exchanged data communication 3 generated by another client application 62, ends this time period at step 408. At step 410 this time period then allows the analysis module 46 to reliably calculate for each of such requests for content of a targeted server 64 in a personalised way, this means for each of the respective MVNO subscribers 34, how much time was spent on this content of this targeted server 64. Typically this time spent is often referred to as reading time when the content is comprises text, viewing time when the content comprises video or images, listening time when the content comprises audio, etc. It is clear that in this way the proxy server allows for a more reliable and precise determination of the usage time without requiring any modification of the client application 62, the targeted server 64, the data communication 3 exchanged, etc. which is especially useful in the context of dedicated client applications 62 of the mobile station 38 of an MVNO subscriber, such as for example dedicated audio or video streaming client applications, dedicated social network client applications, etc.

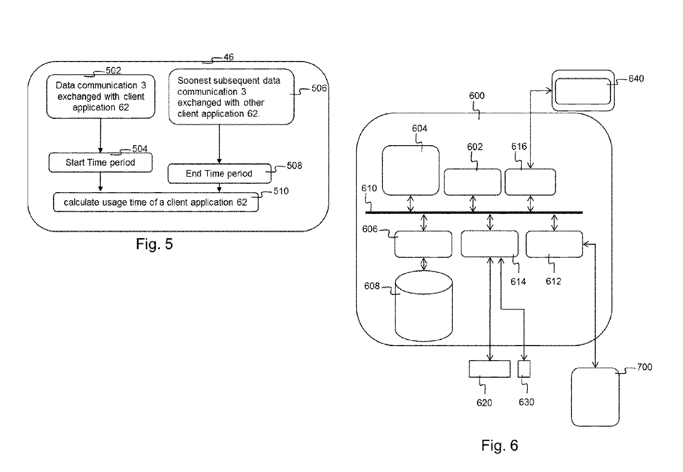

Figure 5 schematically illustrates a further embodiment of a method of operating the analysis module 46. As described above, and as shown in Figure 1, this analysis module 46 of the proxy server 40 is suitable coupled to the logger database 44 in which for each logged exchanged data communication 3, next to a subscriber identifier 36 also a timestamp 66, an identifier for the client application 62 of the mobile station of the MVNO subscriber 34 and an identifier for the targeted server 64 connected to the packet data network 20 involved in the logged data communication 3 are stored. As shown in Figure 5, at step 502 the analysis module 46 detects an exchange of data communication of a particular client application 62 in the logged data as provided by the logger module 42 to the logger database 44. This is for example an initial logged exchange of data communication with this particular identifier of this client application 62 as provided by the logger module 42 to the logger database 44. As shown in Figure 5, subsequently at step 504 the timestamp associated with this initial logged exchange of data communication 3 associated with this particular identifier of the client application 62 is used as the start of a time period. As soon as there is detected a subsequent entry in the logged data provided by the logger module 42 to the logger database 44 associated with an identifier of another client application 62, as shown in step 506, the analysis module 46 at step 508 will make use of the associated time stamp of this subsequent data entry of the logger database 44 as an end of the time period started at step 504. As shown in Figure 5 this then enables the analysis module 46 of the proxy server 40 to calculate the usage time of this client application 62 in function of this time period starting with the time stamp of exchanged data communication 3 by this client application 62 and ending with the time stamp of the soonest subsequent exchanged data communication 3 generated by another client application 62 of the mobile station 38 of the MVNO subscriber 34. It is clear that, when this is performed respectively for each client application of which the logger module 42 provides logged data to the logger database 44, a personalised tracking for each MVNO subscriber of the usage time of each respective client application 62 can be calculated or aggregated in a reliable way without requiring access to the mobile station 38 of the MVNO subscriber 34 and without requiring modifications to the operation of these client applications or modifications of the content provided by the targeted server 64 to such client applications 62 on the mobile station 38 of the MVNO subscriber 34.

As already mentioned above with reference to the embodiment of Figure 1, the subscriber identifier 36 stored in the logger database 44 together with the logged exchanged data communication 3 by the logger module 42 preferably comprises one or more of the following: an international mobile subscriber identity; a Mobile Station International Subscriber Directory Number; an International Mobile Station Equipment Identity. This is preferred as such type of subscriber identifier 36 of the MVNO subscriber 34 allow for the logger module 42 to further store in the logger database 44, together with this subscriber identifier 36, for example billing data or call data records received by the MVNO 32 from the mobile network operator 12. Additionally this also facilitates the logger module to further store in the logger database 44, together with this subscriber identifier 36 for example location related information provided by the respective mobile station 38 of this MVNO subscriber 34, such as for example a cell id, or Global Positioning System coordinates. In this way the personalised logged data communication 3 exchanged can be enriched by further additional data available to the MVNO 32 allowing for still further possibilities for enriched analysis by for example the analysis module 46 of the proxy server 40, without requiring extensive modifications to the mobile station 38 of the MVNO subscriber 34 or the PLMN 10 of the mobile network operator 12.

Figure 6 shows a suitable computing system 600, 700 for hosting the proxy server 40 or any of its components such as the logger module 42, the logger database 44, the analysis module 46, the configuration module 48, etc. of the system of Figure 1. Computing system 600 may in general be formed as a suitable general purpose computer and comprise a bus 610, a processor 602, a local memory 604, one or more optional input interfaces 614, one or more optional output interfaces 616, a communication interface 612, a storage element interface 606 and one or more storage elements 608. Bus 610 may comprise one or more conductors that permit communication among the components of the computing system. Processor 602 may include any type of conventional processor or microprocessor that interprets and executes programming instructions. Local memory 604 may include a random access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator to input information to the computing device 600, such as a keyboard 620, a mouse 630, a pen, voice recognition and/or biometric mechanisms, etc. Output interface 616 may comprise one or more conventional mechanisms that output information to the operator, such as a display 640, a printer, a speaker, etc. Communication interface 612 may comprise one or more transceiver-like mechanisms such as for example two 1Gb Ethernet interfaces that enables computing system 600 to communicate with other devices and/or systems, for example mechanisms for communicating with one or more other computing systems 700. The communication interface 612 of computing system 600 may be connected to such another computing system 700 by means of a local area network (LAN) or a wide area network (WAN), such as for example the internet. Storage element interface 606 may comprise a storage interface such as for example a Serial Advanced Technology Attachment (SATA) interface or a Small Computer System Interface (SCSI) for connecting bus 610 to one or more storage elements 208, such as one or more local disks, for example 1TB SATA disk drives, and control the reading and writing of data to and/or from these storage elements 608. Although the storage elements 608 above is described as a local disk, in general any other suitable computer-readable media such as a removable magnetic disk, optical storage media such as a CD or DVD, - ROM disk, solid state drives, flash memory cards, ... could be used.

The components of the system of Figure 1, such as the proxy server 40 or any of its components such as for example the logger module 42, etc. can be implemented as programming instructions stored in the local memory 604 of the computing system 600 for execution by its processor 602. Alternatively these components could be stored on the storage element 608 or be accessible from another computing system 700 through the communication interface 612.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof as defined by the claims.

The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for personalised logging of data communication (1, 3) between a mobile telecommunication network (10) of a mobile network operator (12) and a packet data network (20), the method comprising the steps of:
- establishing a mobile virtual network (30) operated by a mobile virtual network operator (32), the mobile virtual network (30) making use of the mobile telecommunication network (10) of the mobile network operator (12), the mobile virtual network (30) comprising a proxy server (40) outside the mobile telecommunication network (10);
- exchanging said data communication (3) of mobile stations (38) of subscribers (34) of the mobile virtual network operator (32) between the mobile telecommunication network (10) and the packet data network (20) via said proxy server (40), said proxy server (40), by means of a logger module (42), storing, at least partly, the exchanged data communication (3), together with a subscriber identifier (36) of the respective subscriber (34) in a logger database (44); and
- exchanging said data communication (1) of mobile stations (18) of subscribers (14) of the mobile network operator (12), which are not subscribers (34) of the mobile virtual network operator (32), not via said proxy server (40).

2. A method according to claim 1, wherein the method comprises the further steps of, when exchanging said data communication (3) of subscribers (34) of the mobile virtual network operator (32):
- said proxy server (40) exchanging with the mobile telecommunication network (10) the subscriber identifier (36) of the subscriber (34);
- said proxy server (40) not exchanging the subscriber identifier (36) of the subscribers (34) with the packet data network (20).

3. A method according to any of the preceding claims, wherein the mobile telecommunication network (10) comprises a packet data network gateway (50), the method comprising the further step of the packet data network gateway (50) selectively routing:
- said data communication (3) of subscribers (34) of the mobile virtual network operator (32) to the proxy server (40); and
- said data communication (1) of subscribers (14) of the mobile network operator (12), which are not subscribers (34) of the mobile virtual network operator (32), not via said proxy server (40), to the packet data network (20).

4. A method according to claim 3, wherein the method comprises the further step of the packet data network gateway (50) selectively providing:
- a first access point name (51) for establishing said data communication (1) of subscribers (14) of the mobile network operator (12), which are not subscribers (34) of the mobile virtual network operator (32), to the packet data network (20);
- a further access point name (53), different from said first access point name (51), for establishing said data communication (3) of subscribers (34) of the mobile virtual network operator (32) to the proxy server (40).

5. A method according to any of the preceding claims, wherein the method comprises the further steps of:
- providing the mobile stations (38) of the subscribers (34) of the mobile virtual network operator (32) with a root certificate for allowing secured exchange of data communication (3) to the proxy server (40);
- the proxy server (40) establishing a secured exchange of said data communication (3) of mobile stations (38) of subscribers (34) of the mobile virtual network operator (32) between the mobile telecommunication network (10) and the packet data network (20) via said proxy server (40), by:
- providing a secured exchange of said data communication (3) through said mobile telecommunication network (10) authenticated by means of said root certificate;
- said logger module (42) of the proxy server (40) accessing said secured data communication (3) exchanged through said mobile telecommunication network (10) by means of said root certificate;
- providing a secured exchange of said data communication (3) through said packet data network (20) authenticated by means of a valid certificate of a trusted certificate authority.

6. A method according to claim 5, wherein the secured exchange of said data communication (3) with the proxy server (40) makes use of at least one of the following protocols for secured communication over a packet data network:
- Hypertext Transfer Protocol with a connection encrypted by Transport Layer Security;
- Hypertext Transfer Protocol with a connection encrypted by Secure Sockets Layer.

7. A method according to any of the preceding claims, wherein the proxy server (40) further comprises a configuration module (48) connected to the logger module (42), and the method comprises the further step of the configuration module (48) configuring the logger module (42) to selectively log said data communication (3) exchanged through said proxy server (40) in function of configuration parameters corresponding to one or more of the following:
- a client application (62) of the mobile station (38) involved in the exchanged data communication (3);
- a targeted server (64) coupled to the packet data network (20) involved in the exchanged data communication (3).

8. A method according to claim 7, wherein the configuration module (48) comprises respective configuration parameters for each of the subscribers (34) of the mobile virtual network operator (32).

9. A method according to claim 8, wherein the mobile station (38) of the subscriber (34) of the mobile virtual network operator (32) comprises a configuration client application (68), and the method comprises the further step of the subscriber (34) adapting its respective configuration parameters of the configuration module (48) by means of the configuration client application (68).

10. A method according to claim 8 or 9, wherein the configuration module (48) comprises for each of the subscribers (34) a first setting (312) of the configuration parameters (70) for the configuration module (48) and at least one further setting (314) of the configuration parameters (70) different from said first setting (312) of the configuration parameters, the method comprising the further step of the configuration module (48) configuring the logger module (42) by means of the first setting (312) of the configuration parameters (70) during a first time period (302) and by means of the at least one further setting (314) of the configuration parameters (70) during at least one respective further time period (304).

11. A method according to any of the preceding claims, wherein the method comprises the further step of the logger module (42) further storing in the logger database (44):
- a time stamp related to the stored exchanged data communication (3);
- a client application (62) of the mobile station (38) involved in the stored exchanged data communication (3);
- a targeted server (64) coupled to the packet data network (20) involved in the stored exchanged data communication (3).

12. A method according to claim 11, wherein the proxy server (40) comprises an analysis module (46) coupled to the logger database (44), the method comprising the further step of calculating the time spent on content provided by a targeted server (64) to a client application (62) in function of a time period starting with the time stamp of the request from this client application (62) for this content from the targeted server (64) and ending with the time stamp (66) of the soonest of one the following events subsequent to the start of the time period:
- a request by this client application (62) for other content of the targeted server (64);
- a request by this client application (62) for content of another targeted server (64);
- an exchanged data communication (3) generated by another client application (62).

13. A method according to claim 11 or 12, wherein the proxy server (40) comprises an analysis module (46) coupled to the logger database (44), the method comprising the further step of calculating a usage time of a client application (62) in function of a time period starting with the time stamp of exchanged data communication (3) by this client application (62) and ending with the time stamp of a soonest subsequent exchanged data communication (3) generated by another client application (62).

14. A method according to any of the preceding claims, wherein the subscriber identifier (36) comprises one or more of the following:
- an international mobile subscriber identity;
- a Mobile Station International Subscriber Directory Number;
- an International Mobile Station Equipment Identity,
and/or wherein the method comprises the further step of supplementing the logger module (42) further storing in the logger database (44) together with the subscriber identifier (36) one or more of the following respective data received:
- from the mobile network operator (12):
- billing data;
- call data records;
- from the respective mobile station (38):
- cell id;
- Global Positioning System coordinates.

15. A system configured to perform the method for personalised logging of data communication (1, 3) between a mobile telecommunication network (10) of a mobile network operator (12) and a packet data network (20) according to any of the preceding claims, the system comprising:
- a mobile virtual network (30) operated by a mobile virtual network operator (32), the mobile virtual network (30) configured to make use of the mobile telecommunication network (10) of the mobile network operator (12), the mobile virtual network (30) comprising a proxy server (40) outside the mobile telecommunication network (10);
- the system being configured to exchange said data communication (3) of mobile stations (38) of subscribers (34) of the mobile virtual network operator (32) between the mobile telecommunication network (10) and the packet data network (20) via said proxy server (40), said proxy server (40) comprising a logger module (42) configured to store, at least partly, the exchanged data communication (3), together with a subscriber identifier (36) of the respective subscriber (34) in a logger database (44); and
- the system being configured to exchange said data communication (1) of mobile stations (18) of subscribers (14) of the mobile network operator (12), which are not subscribers (34) of the mobile virtual network operator (32), not via said proxy server (40).
